Europäisches Patentamt

European Patent Office

Office européen des brevets

(19)

(11) Veröffentlichungsnummer: **0 176 941**
**B1**

(12) **EUROPÄISCHE PATENTSCHRIFT**

(45) Veröffentlichungstag der Patentschrift:
**09.08.89**

(51) Int. Cl.⁴: **G06F 12/10, G06F 12/02**

(21) Anmeldenummer: **85112128.5**

(22) Anmeldetag: **25.09.85**

(54) Schaltungsanordnung zum Löschen von Speichereinträgen in einem Adressumsetzungsspeicher.

(30) Priorität: **28.09.84 DE 3435825**

(43) Veröffentlichungstag der Anmeldung:
**09.04.86 Patentblatt 86/15**

(45) Bekanntmachung des Hinweises auf die Patenterteilung:
**09.08.89 Patentblatt 89/32**

(84) Benannte Vertragsstaaten:
**AT BE CH DE FR GB IT LI NL SE**

(56) Entgegenhaltungen:
**DE-A- 2 641 722**
**US-A- 4 053 948**
**US-A- 4 068 303**

**IBM TECHNICAL DISCLOSURE BULLETIN, Band 23,
Nr. 3, August 1980, Seiten 1128-1133, New York, US; K.S.
LIN: "Fast purging for an array table"**

(73) Patentinhaber: **Siemens Aktiengesellschaft Berlin und
München, Wittelsbacherplatz 2, D-8000 München 2(DE)**

(72) Erfinder: **Köhler, Manfred, Dipl.-Ing., Eichenstrasse 4,
D-8011 Putzbrunn(DE)**

**Beschreibung**

Die Erfindung bezieht sich auf eine Schaltungsanordnung zum Löschen von Speichereinträgen in einem Adreßumsetzungsspeicher gemäß dem Oberbegriff des Patentanspruchs 1.

Kommerzielle Datenverarbeitungsanlagen arbeiten gewöhnlich mit virtueller Adressierung, wobei der dafür vorgesehen virtuelle Adreß- oder Speicherraum in Segmente mit jeweils mehreren Seiten gleicher Größe, üblicherweise 2 KB oder 4 KB, unterteilt ist. Im Falle eines Mehrbenutzersystems arbeitet jedes Benutzerprogramm bzw. jeder Anwender innerhalb eines eigenen virtuellen Raumes von jeweils 0 bis z.B. 16 MByte. Jeder Benutzer hat dabei als Kennzeichen seine eigene sogenannte Segmenttafel- Basis, so daß sich die virtuellen Adressen aller Benutzerprogramme leicht voneinander trennen lassen.

Die Verwendung virtueller Speicher bedeutet bekanntlich, daß beim Zugriff zum Arbeitsspeicher vorher jede virtuelle Adresse in eine reelle, physikalische Adresse übersetzt werden muß. Das Erreichen einer hohen Prozessorleistung setzt weiterhin voraus, daß neben den Übersetzungstafeln, die vom Betriebssystem im Hauptspeicher zur Verfügung gestellt werden, eine Hardware-Unterstützung in der Zentraleinheit, die sogenannte Adreßumsetzungseinheit vorhanden ist. In dieser Adreßumsetzungseinheit sollen möglichst die aktuellsten Einträge der Übersetzungstafeln resident gehalten werden. Jeder Ein trag in der Adreßumsetzungseinheit enthält dabei neben umfangreicher Steuerinformation als wesentliche Nutzinformation Teile der virtuellen Adresse und die zugehörige reelle Adresse.

Zu den Steuerinformationen gehören unter anderem sogenannte Gültigkeitsbits, mit deren Hilfe die Einträge nach dem Laden für gültig erklärt werden. Ein auf "Eins" gesetztes Gültigkeitsbit bedeutet, daß die in der zugehörigen Zeile des Adreßumsetzungsspeichers abgelegte Information mit dem entsprechenden Eintrag in der im Hauptspeicher vom Betriebssystem aufgebauten vollständigen Adreßübersetzungstafel übereinstimmt.

Wenn das Betriebssystem die Adreßübersetzungstafel(n) im Hauptspeicher modifiziert bzw. vollständig neu aufbaut, muß dafür Sorge getragen werden, daß die entsprechenden Kopien im Adreßumsetzungsspeicher für ungültig erklärt werden. Hierzu gibt es Löschbefehle, die ein vollständiges oder partielles Löschen der Einträge im Adreßumsetzungsspeicher bewirken. Diese Löschvorgänge, bei denen alle Einträge der Adreßumsetzungseinheit sequentiell adressiert werden müssen, verursachen andererseits aber wieder einen erheblichen Zeitaufwand, so daß der normale Betriebsablauf empfindlich gestört wird. Es ist deshalb bereits bekannt, zwei voneinander unabhängige Spalten zur Speicherung von Gültigkeitsbits vorzusehen, von denen jeweils eine Spalte aktiviert und die jeweils andere gesperrt ist.

Der vorliegenden Erfindung liegt nun die Aufgabe zugrunde, eine Schaltungsanordnung zum Löschen von Speichereinträgen in einer Adreßumsetzungseinheit so auszugestalten, daß im Hinblick auf die Erfordernisse bei einem Multibenutzersystem selektive Löschmöglichkeiten zur Unterstützung differenzierter Anforderungen aus dem Betriebssystem gegeben sind, beispielsweise Totallöschung, gezielte Löschung der Betriebssystem-Einträge oder aller Benutzereinträge. Außerdem sollen hardwarebedingte Löschvorgänge weitgehend vermieden und der Zeitaufwand für die Löschvorgänge möglichst gering gehalten werden.

Die Lösung dieser Aufgabe ergibt sich erfindungsgemäß durch die kennzeichnenden Merkmale des Patentanspruchs 1.

Sofern nur eine Löschung von Einträgen mit einem vorgegebenen reellen Seitentafeleintrag erforderlich ist, erweist sich eine Lösung gemäß den Merkmalen des Anspruchs 2 als besonders vorteilhaft.

Im folgenden wird ein Ausführungsbeispiel der Erfindung anhand der Zeichnung näher erläutert. Dabei zeigen

FIG 1 den prinzipiellen Aufbau einer aus mehreren Bänken bestehenden Adreßumsetzungseinheit

FIG 2 eine erfindungsgemäße Schaltungsanordnung zum Löschen von Speichereinträgen in einer Adreßumsetzungseinheit nach FIG 1.

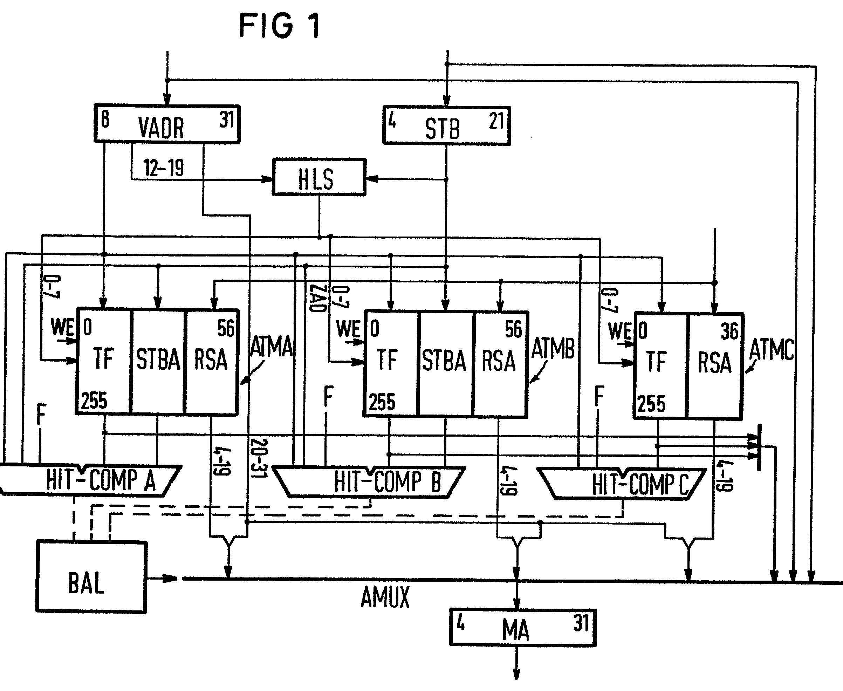

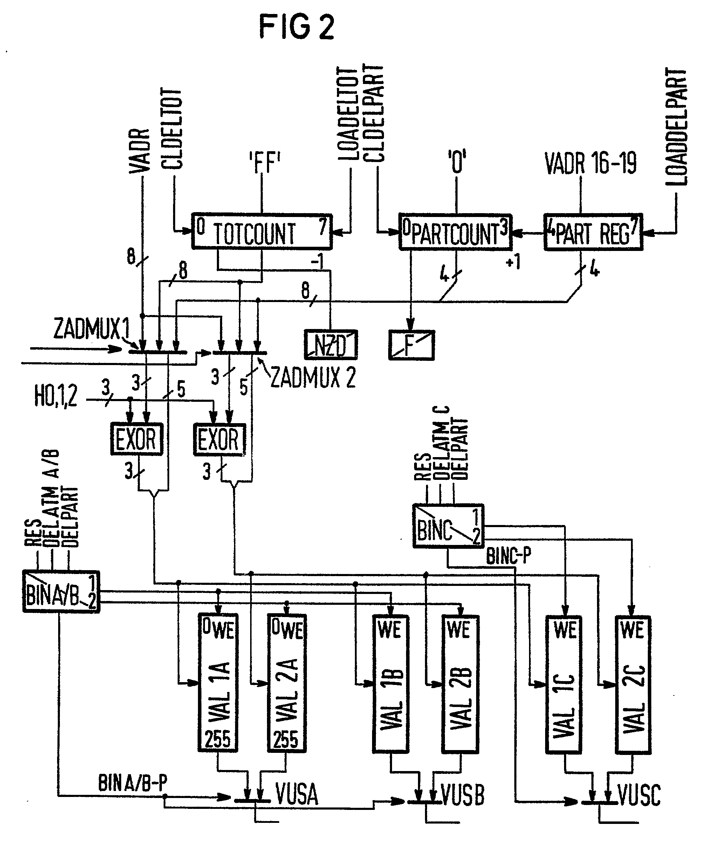

Die in FIG 1 dargestellte Adreßumsetzungseinheit besteht aus insgesamt drei Bänken ATM A, ATM B und ATM C, wobei die beiden erstgenannten Bänke ATM A und ATM B für die Seitentafeleinträge der Benutzerprogramme und die weitere Bank ATM C für die Seitentafeleinträge des Betriebssystems vorgesehen sind. Jede Bank enthält einen Adreßbereich RSA zur Speicherung der reellen Seiten adressen einschließlich der Paritätsbits und ein Tag/ Flag-Feld TF, in dem neben verschiedenen Steuerbits, Gültigkeitsbits und Paritätsbits die vier höchstwertigen Bits 8 bis 11 der virtuellen Adresse gespeichert sind. Die beiden Bänke ATM A und ATM B für die Seitentafeleinträge der Benutzerprogramme enthalten darüber hinaus ein Kontrollfeld STBA, in welchem jeweils die Segmenttafel- Basis mit den Bits 4 bis 21 zum jeweils zugehörigen Benutzerprogramm gespeichert ist. Bei der Bank ATM C, in der ausschließlich Seitentafeleinträge des Betriebssystems geführt werden, kann das Abspeichern der Segmenttafel-Basis entfallen, da die Zugehörigkeit einer Adresse zum System-Adreßraum an der virtuellen Adresse selbst erkannt werden kann und eine spezielle Segmenttafel-Basis für das Betriebssystem nicht erforderlich ist. Damit kann in dieser Bank ATM C der Speicherplatz für die 18 Bits der Segmenttafel- Basis mit den zugehörigen zwei Paritätsbits eingespart werden. Die zu übersetzende virtuelle Adresse (24 Bits) wird über das Adreßregister VADR angeboten. Die aktuelle Segmenttafel-Basis ist im Steuerregister STB abgespeichert. Jeder Bank ist außerdem eine Hit-Vergleicherschaltung HIT-COMP A, HIT-COMP B, HIT-COMP C zugeordnet, wobei die Hit-Vergleicherschaltung HIT-COMP C für die Bank ATM C wegen des nicht erforderlichen Vergleichs der Segmenttafel-Basis entsprechend weniger aufwendig ist. Falls keine Hardware-Störung vorliegt, kann nur jeweils eine Hit-Vergleicherschaltung eine Signalgleichheit und damit einen erfolgreichen Zugriff, d.h. einen Hit melden. Abhängig von der jeweiligen Hit- Meldung wird dann die übersetzte reelle Adresse über einen Ausgangsmultiplexer AMUX, gesteuert durch eine Bankauswahl-Logik BAL, in ein Hauptspeicher-Adreßregister MA übertragen. Die Adressierung der drei Bänke erfolgt simultan mit Hilfe der Zeilenadresse ZAD 0-7, die in einer Modifizierlogik HLS durch "Verwürfeln" der Bits 12 bis 19 der virtuellen Adresse aus dem Adreßregister VADR mit den Bits der Segmenttafel-Basis aus dem Steuerregister STB entsteht (siehe auch das EXOR-Glied EXOR mit den drei Modifizierbits H 0, 1, 2 in FIG 2.

Die FIG 2 zeigt je zwei aus RAM-Bausteinen gebildete Gültigkeitsbit-Spalten VAL 1A, 2A, VAL 1B, 2B und VAL 1C, 2C für die drei Adreßumsetzungsspeicher-Bänke ATM A, ATM B und ATM C nach FIG 1 sowie die zugehörige Löscheinrichtung. Diese Löscheinrichtung ermöglicht eine Reihe verschiedener Löschvorgänge, die im folgenden näher erläutert werden.

Der erste Fall betrifft die totale Löschung sämtlicher Einträge in allen drei Bänken. Zunächst erfolgt ein Umschalten von einer ersten auf eine zweite bereits vorgelöschte Gültigkeitsbit-Spalte mit Hilfe der ausgangsseitigen Umschalter VUS A, VUS B, VUS C. Damit ist der Löschvorgang für alle drei Bänke abgeschlossen und der normale Betrieb kann weitergehen.Die Umschalter für die Bänke A und B einereits und für die Bank C andererseits werden von je einer Umschaltlogik BIN A/B bzw. BIN C angesteuert, die ihrerseits wieder durch decodierte Löschbefehle RES, DELPART, DELATM A/B, DELATM C angesteuert werden. Nach dem Umschalten auf die jeweils vorgelöschten Gültigkeitsbit-Spalten werden die Schreibfreigabe-Wege WE für die drei außer Betrieb genommenen Gültigkeitsbit-Spalten freigeschaltet. Gleichzeitig wird ein 8-Bit-Zähler TOTCOUNT über den Ladetakt LOADDELTOT mit "FF" geladen. Ausgangsseitig ist dieser Zähler mit je einem Eingang zweier getrennt ansteuerbarer Zeilenadreß- Multiplexer ZADMUX 1,2 verbunden, denen über je einen weiteren Eingang die Lese- und Schreibadressen VADR zu geführt werden. Auf diese Weise werden die Ausgangssignale des Zählers TOTCOUNT in die beiden Adressierungswege für die jeweils ersten und zweiten Gültigkeitsbit-Spalten eingeschleust. Zeitlich parallel zur weiteren Programmverarbeitung werden dann pro Maschinenzyklus zwei Zähltakte CLDELTOT erzeugt, die den Zähler TOTCOUNT bis auf Null zurückzählen und damit alle Gültigkeitsbits in den außer Betrieb genommenen Gültigkeitsspalten löschen.

Analog zur Totallöschung aller ATM-Einträge ist auch eine partielle Löschung möglich, z.B. eine separate Löschung aller Betriebssystem-Einträge oder eine Löschung aller Benutzerprogramm-Einträge. In diesem Fällen wird dann entweder nur die Umschaltlogik BIN C oder nur die Umschaltlogik BIN A/B aktiviert. Dementsprechend werden nur die der Bank C oder nur die den Bänken A und B zugeordneten Gültigkeitsbit-Spalten umgeschaltet und die jeweils außer Betrieb genommene Spalte gelöscht.

Es besteht auch die Möglichkeit, beim generellen Rücksetzen des Prozessors, d.h. im Stopp-Betrieb, über beide Umschalt-Logikschaltungen BIN A/B, BIN C gleichzeitig alle Schreibfreigabewege WE für alle sechs Gültigkeitsbit-Spalten freizuschalten und sämtliche Spalten gleichzeitig zu löschen.

Schließlich gibt es auch noch die Möglichkeit, nur solche Adreßumsetzungsspeichereinträge zu löschen, die einen vorgegebenen reellen Seitentafeleintrag enthalten. Da in einer ATM-Bank Einträge aus mehreren Seitentabellen hinterlegt werden können, müßte die in Betracht kommende Zeile x mehrfach gesucht werden mit der Folge, daß für jede Seitentafel die jeweils x-te Zeile adressiert, der Inhalt verglichen und bei Gleichheit die entsprechende Zeile gelöscht wird. Da dies einen erheblichen Aufwand bedeutet, wird auf die Überprüfung der reellen Seitennummer verzichtet und stattdessen jede x-te Zeile, d.h. 1/x der ATM-Kapazität gelöscht. Zu diesem Zweck ist ein zweiteiliger n-Bit-Zähler vorgesehen, der aus einem m niederwertige Bitstellen aufweisenden FestwertRegister PART REG und einem n-m höherwertige Bitstellen aufweisenden Zähler PARTCOUNT besteht. Im Festwert-Register PARTREG stehen die Bits 16-19 der virtuellen Adresse (Adresse des Seitentafeleintrages), die mit dem Ladetakt LOADDELPART eingespeichert werden, als Konstante, während im Zähler PART COUNT von "Null" beginnend, hochgezählt wird. Die Ausgänge von Festwert-Register PARTREG und Zähler PARTCOUNT werden schließlich zusammengefaßt und als Summenwert über je einen dritten Eingang der Zeilenadreß-Multiplexer ZADMUX 1, 2 in die Adressierungswege eingeschleust. Auf diese Weise wird jede x-te, z.B. jede sechzehnte Zeile adressiert, und gelöscht. Unter diesen gelöschten Zeilen ist dann zwangsläufig auch die Zeile mit dem zu löschenden Eintrag. Sie ist deshalb dabei, weil alle von diesem partiellen Löschvorgang betroffenen Einträge die gleiche virtuelle Seitenadresse relativ zum Segmentanfang haben. Im Gegensatz zu dem bisher beschriebenen Löschverfahren werden hier die Schreibfreigabe-Wege WE zu den jeweils aktiven Gültigkeitsbit- Spalten freigeschaltet. Es darf also nicht auf die alternativen Gültigkeits-Spalten umgeschaltet werden. Der Löschvorgang kann deshalb auch nicht parallel zum normalen Betrieb ablaufen. Stattdessen sind im Löschbefehl acht Leeroperationen programmiert, so daß pro Maschinenzyklus mit dem Zähltakt CLDELPART je zwei Einträge in allen drei Bänken gleichzeitig gelöscht werden können.

**Patentansprüche**

1. Schaltungsanordnung zum Löschen von Speichereinträgen aus Adreßübersetzungstabellen in einem im Zentralprozessor einer Datenverarbeitungsanlage mit virtueller Speicheradressierung vorgesehenen, aus mehreren Bänken bestehenden Adreßumsetzungsspeicher, in welchem jeweils zeilenweise die der virtuellen Adresse zugeordnete reelle Seitenadresse, eine dem jeweiligen Benutzerprogramm zugeordnete Segmenttafel-Basis und in einem Tag/Flag- Feld ein Teil der virtuellen Adresse sowie Steuerbits, Paritätsbits und zwei, jeweils einer ersten und zweiten Gültigkeitsspalte zugeordnete Gül tigkeitsbits gespeichert sind, wobei durch eine gesteuerte Umschaltung jeweils eine Gültigkeitsspalte aktiviert und die jeweils andere gesperrt ist, **dadurch gekennzeichnet,** daß ausgehend von einem Adreßumsetzungsspeicher, bei der eine erste Bank (ATM C) ausschließlich den Einträgen des Betriebssystems und wenigstens eine zweite Bank (ATM A, ATM B) den Einträgen für die Benutzerprogramme zugeordnet ist, für die erste Bank (ATM C) und für die zweite Bank (ATM A, ATM B) je eine Umschaltlogik (BIN C, BIN A/B) vorgesehen ist, mittels der die Schreibfreigabe-Wege (WE) jeweils einer oder beider Gültigkeitsspalten (VAL 1C, VAL 2C, VAL 1A, VAL 2A, VAL 1B, VAL 2B) der jeweils zugeordneten Bank freigeschaltet werden und daß in den Adressierungswegen für die jeweils ersten und zweiten Gültigkeitsspalten jeweils getrennt ansteuerbare Zeilenadreßmultiplexer (ZAD MUX 1, 2) vorgesehen sind, die neben einem ersten Eingang für Lese- oder Schreibadressen (VADR) wenigstens einen zweiten Eingang aufweisen, der mit dem Ausgang eines n-stelligen Zählers (TOTCOUNT) verbunden ist, dessen Zähltakte zeitlich parallel zur weiteren Pro grammverarbeitung die jeweils gesperrte Gültigkeitsspalte löschen.

2. Schaltungsanordnung nach Anspruch 1, **durch gekennzeichnet,** daß eine weitere Zähleinrichtung vorgesehen ist, die aus einem m niederwertige Bitstellen aufweisenden Festwert-Register (PART REG) und einem n-m höherwertige Bitstellen aufweisenden Zähler (PARTCOUNT) besteht und deren zusammengefaßte Ausgänge mit je einem weiteren Eingang der Zeilenadreß- Multiplexer (ZADMUX 1, 2) verbunden sind.

## Claims

1. Circuit arrangement for clearing storage entries from address translation tables in an address translation memory consisting of several banks, which is provided in the central processor of a data processing system with virtual memory addressing, and in which in each case the real page address associated with the virtual address, a segment table base associated with the respective user program, and, in a tag/flag field, a part of the virtual address and control bits, parity bits and two validity bits, in each case associated with a first and second validity column, are in each case stored line by line, one validity column in each case being activated and the respective other one being disabled by a controlled switch-over, characterized in that, on the basis of an address translation memory in which a first bank (ATM C) is exclusively allocated to the entries of the operating system and at least one second bank (ATM A, ATM B) is allocated to the entries for the user programs, one switch-over logic (BIN C, BIN A/B) each is provided for the first bank (ATM C) and for the second bank (ATM A, ATM B), by means of which logic the write enable paths (WE) of in each case one or both validity columns (VAL 1C, VAL 2C, VAL 1A, VAL 2A, VAL 1B, VAL 2B) of the bank associated in each case are enabled and that in each case separately controllable line address multiplexers (ZADMUX 1, 2) are provided in the addressing paths for the first and second validity columns in each case, which multiplexers, in addition to a first input for read or write addresses (VADR), exhibit at least one second input which is connected to the output of a digit counter (TOTCOUNT), the counting pulses of which clear the validity column disabled in each case, parallel in time with the further program processing.

2. Circuit arrangement according to Claim 1, characterized in that a further counting device is provided which consists of a constant-value register (PARTREG) exhibiting m least-signigicant bit positions and of a counter (PARTCOUNT) exhibiting n-m most-significant bit positions and the combined outputs of which are connected to one further input each of the line address multiplexer (ZADMUX 1, 2).

## Revendications

1. Montage pour effacer des rubriques de mémoire constituées par des tables de conversion d'adresses dans un processeur central d'une installation pour le traitement de données avec une mémoire de conversion d'adresses à adressage virtuel de la mémoire et constituée par plusieurs banques, et dans laquelle sont mémorisées, ligne par ligne, l'adressepage réelle qui est associée à l'adresse virtuelle, une table de segments de base associée au programme d'utilisateur concerné, et, dans un champ de marquage, une partie de l'adresse virtuelle ainsi que des bits de commande, de bits de parité et deux bits de validation respectivement associés à une première et à une seconde colonne de validation, une colonne de validation étant activée et l'autre étant bloquée grâce à une commutation commandée, caractérisé par le fait qu'en partant d'une mémoire de conversions d'adresses, dans laquelle une première banque (ATM C) est associée exclusivement aux rubriques du système d'exploitation et au moins une seconde banque (ATM A, ATM B) est associée aux rubriques pour le programme d'utilisateur, il est prévu respectivement pour la première banque (ATM C) et pour la seconde banque (ATM A, ATM B), une logique de commutation (BIN C, BIN A/B) à l'aide desquelles sont déconnectées les voies d'autorisation de l'écriture (WE) de l'une ou des deux colonnes de validation (VAL 1C, VAL 2C, VAL 1A, VAL 2A, VAL 1B, VAL 2B) de la banque associée, et que dans les voies d'adressage il est prévu respectivement pour la première colonne de validation et pour la seconde colonne de validation des multiplexeurs respectifs d'adresse de ligne (ZAD MUX 1, 2) susceptibles d'être attaqués séparément et qui possèdent, en plus d'une première entrée pour des adresses de lecture ou d'écriture (VADR), au moins une seconde entrée qui est reliée à la sortie d'un compteur (TOTCOUNT) à n-chiffre, dont les cadences de comptage procèdent, temporellement et en parallèle à la poursuite du traitement du programme, à l'effacement de la colonne de validation bloquée.

2. Montage selon la revendication 1, caractérisé par le fait qu'il est prévu un second dispositif de comptage qui est constitué par un registre permanent (PARTREG) possédant m chiffres binaires de faible poids et par un compteur (PARTCOUNT) à n-m chiffre binaires de poids plus élevé, et dont les sorties assemblées sont reliées respectivement avec une entrée supplémentaire de multiplexeur d'adresse de ligne (ZADMUX 1, 2).

FIG 1

FIG 2